# DEMANDE DE BREVET EUROPEEN

(11) **EP 1 930 093 A1**
(43) Date de publication de la demande: **11.06.2008**
(21) Numéro de dépôt: 07291443.5
(22) Date de dépôt: 03.12.2007
(51) Int. Cl.: B21D 1/14, F16B 7/10, G01B 5/207, F16M 11/02, F16M 11/20

(54) **Appareillage pour le contrôle des déformations d'une carrosserie de véhicule, et servante de travail associée**

(30) Priorité: 06.12.2006 FR 0610623
(71) Demandeur: Celette S.A., 38200 Vienne (FR)
(72) Inventeur: Celette-Darmancier, René, 69420 Ampuis (FR)
(74) Mandataire: Jaunez, Xavier

(57) **Abrégé**

L'invention concerne un appareillage pour le contrôle des déformations d'une carrosserie de véhicule, comportant des colonnettes (11) supportant des moyens télescopiques réglables dans une direction verticale.

Conformément à l'invention, les moyens télescopiques (10) comportent chacun une tige-piston (20) montée pour coulisser dans une colonnette associée (11), ladite tige-piston étant choisie parmi une pluralité de tiges-pistons de longueurs axiales différentes et de même diamètre, et une tête (16) fixée de façon démontable au sommet de la tige-piston choisie (20), ladite tête étant configurée de façon propre à chaque type de véhicule concerné, et chaque tige-piston (20) comportant en outre une pluralité de perçages traversants (21) étagés verticalement, dont les axes sont espacés d'une même distance constante prédéterminée et étant agencés pour procurer une graduation en hauteur de pas constant correspondant à ladite distance constante prédéterminée.

## Description

La présente invention concerne un appareillage pour le contrôle des déformations d'une carrosserie des véhicule, et une servante de travail associée audit appareillage.

### ARRIERE PLAN DE L'INVENTION

D'une façon générale, les appareillages conçus pour le contrôle des déformations d'une carrosserie de véhicule endommagé comportent un banc de contrôle constitué par des poutres longitudinales sur lesquelles sont fixées des poutres transversales, lesdites poutres présentant des séries de trous régulièrement espacés servant à fixer des colonnettes ou têtes supportant des moyens télescopiques réglables dans une direction verticale et destinés à coopérer avec des points de la carrosserie à contrôler.

Pour illustrer l'état de la technique on pourra par exemple se référer aux documents EP 0 358 003 B1 et FR 2 423 748 A1 de la demanderesse, ou encore au document FR 2 664 867 A1.

Le banc de contrôle doit être équipé d'une pluralité d'accessoires permettant un contrôle de différents véhicules, ce qui oblige à prévoir une grande variété de tels accessoires compte tenu de la très grande diversité des carrosseries concernées. C'est ainsi que la demanderesse a prévu une servante de travail montée sur roulettes, avec des panneaux muraux permettant d'accrocher un ensemble de vingt-deux colonnettes ou tours de types variables et de hauteurs différentes. L'expérience a en effet montré que ces vingt-deux types de colonnettes ou tours permettaient de tenir compte de la très grande diversité des formes de carrosseries concernées.

Chacune de ces colonnettes ou tours est conçue pour supporter des moyens télescopiques réglables dans une direction verticale et destinés à coopérer avec des points de la carrosserie à contrôler. Jusqu'à présent, on a toujours proposé des moyens télescopiques qui étaient propres à chaque type de carrosserie de véhicule, ce qui oblige à prévoir un très grand nombre de types de moyens télescopiques de réglage, sauf alors à être limité aux types de carrosseries que l'on peut contrôler.

Dans les bancs de contrôle couramment utilisés actuellement, les moyens télescopiques de réglage comportent un ensemble unitaire spécifique à chaque type de véhicule, l'ensemble unitaire étant constitué inférieurement d'une tige-piston montée pour coulisser verticalement dans la colonnette ou tour associée, et supérieurement d'une tête surplombant la tige-piston. Par suite, pour chaque type de véhicule, il est prévu de disposer d'un ensemble dédié de tels composants unitaires, ce qui induit un coût non négligeable et un poids important d'accessoires.

Le document US-A-4 781 045 de la demanderesse représente l'état de la technique le plus proche.

Ce document décrit un appareillage pour le contrôle des déformations d'une carrosserie de véhicule conforme au préambule de la revendication 1. Les moyens télescopiques réglables comportent chacun une tige-piston coulissant verticalement dans une colonnette, et une tête fixée au sommet de la tige-piston. La fixation de la tête est réalisée par soudure directe, de sorte que cette fixation est indémontable. La colonnette est pourvue de deux perçages superposés pour un réglage en hauteur de la tête, dont l'extrémité inférieure peut être contactée par l'extrémité libre de la tige d'un vérin amovible monté dans la colonne creuse.

Le document FR-A-2 384 229 décrit un appareillage analogue dans lequel on utilise des organes télescopiques à perçages superposés équidistants, dont la tige-piston reste associée à la colonnette associée.

L'arrière-plan technologique peut être enfin complété en citant les documents BE-A-899 973, EP-A-1 105 229, US-A-2 275 894, US-A-4 905 496 et US-A-4 934 063.

### OBJET DE L'INVENTION

L'invention a pour objet de concevoir un appareillage comportant des moyens télescopiques de réglage dont la conception permet de diminuer le poids des accessoires ainsi que le coût de fabrication, tout en procurant une adaptabilité optimale aux différents types de carrosseries de véhicules à contrôler.

### DEFINITION GENERALE DE L'INVENTION

Le problème précité est résolu conformément à l'invention grâce à un appareillage pour le contrôle des déformations d'une carrosserie de véhicule, comportant un banc de contrôle constitué d'une base de référence percée sur laquelle sont fixées des poutres longitudinales et des poutres transversales, lesdites poutres présentant des séries de trous régulièrement espacés servant à fixer des colonnettes supportant des moyens télescopiques réglables dans une direction verticale et destinés à coopérer avec des points de la carrosserie à contrôler, les moyens télescopiques de réglage comportant chacun d'une part une tige-piston montée pour coulisser verticalement dans une colonnette associée, ladite tige-piston étant choisie parmi une pluralité de tiges-pistons de longueurs axiales différentes et de même diamètre, et d'autre part une tête fixée de façon démontable au sommet de la tige-piston choisie, ladite tête étant quant à elle configurée de façon propre à chaque type de véhicule concerné, chaque tige-piston de la pluralité de tiges-pistons comportant en outre une pluralité de perçages traversants étagés verticalement, permettant de recevoir une broche de fixation associée à la colonnette à une hauteur choisie parmi la pluralité de hauteurs disponibles, les axes des perçages traversants de chacune des tiges-pistons de la pluralité de tiges-pistons étant espacés d'une même distance constante prédéterminée (d) et étant agencés pour procurer une graduation en hauteur de pas constant correspondant à ladite distance constante prédéterminée (d), conformément à la revendication 1.

Ainsi, en choisissant un nombre adéquat de tiges-pistons dans une pluralité de tiges-pistons de longueurs axiales différentes, on parvient à offrir à toutes les têtes spécifiques possibles un support à la hauteur désirée, sans pour autant nuire à la précision du positionnement de cette tête selon les trois axes de coordonnées X, Y, Z. Par suite, la tête devient le seul élément spécifique propre à chaque type de véhicule, ce qui réduit considérablement le poids des accessoires nécessaires ainsi que le coût de ceux-ci.

De préférence, la colonnette présente deux passages de broche étagés, dont les axes sont distants de 1,5 d de façon à doubler la graduation continue procurée par les tiges-pistons de la pluralité de tiges-pistons. En particulier, la distance constante prédéterminée (d) précitée pourra être choisie égale à 20 mm.

Avantageusement encore, chaque tige-piston de la pluralité de tiges-pistons présente un marquage d'identification propre à chacun de ses perçages traversants, lesdits marquages d'identification formant de préférence une succession de lettres ou de chiffres.

Il sera avantageusement prévu que chaque tige-piston de la pluralité de tiges-pistons présente, au niveau de sa face supérieure, un même agencement de perçages borgnes permettant la fixation et l'indexage angulaire de la tête concernée. En particulier, la fixation est assurée par une vis à tête fraisée et l'indexage angulaire est assuré par une goupille cylindrique, ladite vis et ladite goupille traversant une plaquette faisant partie de la tête.

Avantageusement alors, la tête présente inférieurement un bridage cylindrique destiné à coiffer l'extrémité supérieure de la tige-piston choisie, de façon à procurer à la fois un bridage et un centrage de ladite tête par rapport à ladite tige-piston.

A titre d'exemple particulier, non limitatif, on pourra prévoir que la pluralité de tiges-pistons comporte quatre types de tiges-pistons de longueur respective 110 mm, 170 mm, 230 mm et 310 mm.

L'invention a également pour objet une servante de travail destinée à équiper un appareillage présentant l'une au moins des caractéristiques précédentes, ladite servante de travail étant remarquable en ce qu'elle comporte un plateau portant un ensemble de tiges-pistons, ledit ensemble incluant au moins une de chaque type de tige-piston constituant la pluralité de tiges-pistons, ledit plateau porteur étant équipé de logements débouchant en face supérieure dudit plateau, avec des logements d'axe horizontal pour les tiges-pistons de plus grandes longueurs, et des logements d'axe vertical pour les tiges-pistons de plus petites longueurs.

A titre d'exemple non limitatif particulier, le plateau porteur est réalisé en mousse alvéolaire, et présente quatre logements horizontaux de 310 mm de longueur recevant des tiges-pistons de même longueur, six logements horizontaux de 230 mm recevant des tiges-pistons de même longueur, quatorze logements verticaux de 130 mm recevant des tiges-pistons de 170 mm de longueur, et dix logements verticaux de 70 mm recevant des tiges-pistons de 110 mm de longueur.

### BREVE DESCRIPTION DES DESSINS

D'autres caractéristiques et avantages de l'invention apparaîtront plus clairement à la lumière de la description qui va suivre et des dessins annexés, concernant un mode de réalisation particulier, en référence aux figures des dessins annexés où :
- la figure 1 illustre en perspective un appareillage avec un banc de contrôle de type classique, équipé de moyens télescopiques de réglage conformes à l'invention ;
- la figure 2 illustre en perspective l'un des moyens télescopiques de réglage réalisé conformément à l'invention,
- la figure 3 et une vue en élévation d'un moyen télescopique de réglage, et la figure 4 illustre en coupe axiale le détail IV associé de la figure 3 ;
- les figures 5 et 6 sont d'autres vues en élévation et de dessus du moyen télescopique de réglage de la figure 3 ;
- les figures 7 à 9 sont des vues illustrant la tête faisant partie du moyen télescopique de réglage ;
- les figures 10 à 13 sont des vues illustrant l'une des tiges-pistons susceptibles de constituer un moyen télescopique de réglage avec la tête des figures 7 à 9 ;
- les figures 14 et 15 illustrent à titre d'exemple une pluralité de quatre tiges-pistons de longueurs axiales différentes et de même diamètre, destinées à constituer un ensemble de tiges-pistons capable de s'adapter à tous les types de carrosseries avec la tête précitée ;
- la figure 16 est une vue montrant en superposition les quatre tiges-pistons des figures 14 et 15, afin d'illustrer à la fois la graduation en hauteur de pas constant qui est obtenue par les différentes tiges-pistons, et le marquage d'identification associé à chacun des perçages traversants des tiges-pistons ;
- les figure 17 et 18 illustrent une servante de travail conforme à l'invention, respectivement à l'état fermé et à l'état ouvert, ce dernier état permettant de distinguer le plateau en mousse alvéolaire supportant un ensemble de tiges-pistons de différentes longueurs.

### DESCRIPTION DU MODE DE REALISATION PREFERE DE L'INVENTION

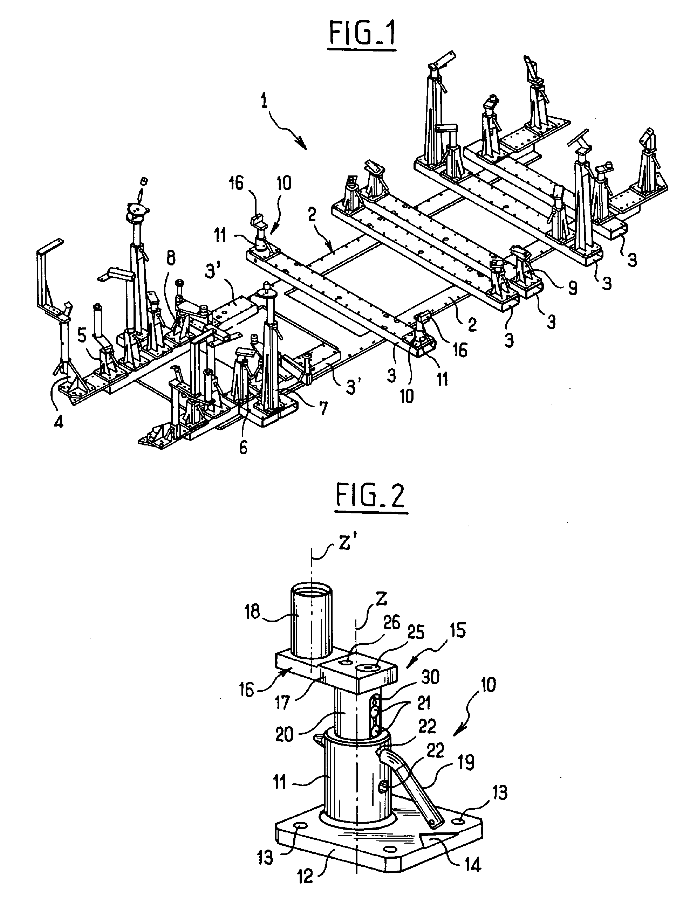

Comme cela est visible sur la figure 1, il est prévu un appareillage pour le contrôle des déformations d'une carrosserie de véhicule (non représentée ici), comportant un banc de contrôle 1 dont la conception générale est bien connue. Le banc de contrôle 1 est ici constitué par une base de référence 2 sur laquelle sont fixées des poutres longitudinales 3' et poutres transversales 3 à différents emplacements repérés par des trous et numérotés. Les poutres transversales et longitudinales présentent ainsi des séries de trous régulièrement espacés, qui servent à fixer des colonnettes ou têtes supportant des moyens télescopiques réglables dans une direction verticale et destinés à coopérer avec des points de la carrosserie à contrôler. Ainsi que cela a été dit plus haut, compte tenu de la grande diversité des géométries des carrosseries à contrôler, ces colonnettes ou têtes doivent présenter des hauteurs différentes, et les moyens télescopiques réglables dans une direction verticale qui sont fixés sur ces colonnettes peuvent aussi présenter une tête de géométrie différente selon le cas.

Sur la figure 1, on a illustré différents types de moyens télescopiques de réglage 4, 5, 6, 7, 8, 9, 10. Chacun de ces moyens télescopiques de réglage supporte un ensemble réglable dans une direction verticale (axe Z) avec une tige-piston montée pour coulisser verticalement dans la colonnette associée et une tête surmontant la tige-piston concernée.

L'invention concerne plus spécifiquement la réalisation structurelle des moyens télescopiques de réglage, et l'on va s'attacher à décrire plus en détail ci-après la structure particulière d'un tel moyen en référence à l'un des moyens télescopiques de réglage du banc de contrôle 1, en l'espèce le moyen 10, étant entendu que la description de l'invention s'appliquera bien évidemment aux autres moyens télescopiques de réglage équipant ledit banc de contrôle, et plus généralement à tous types de moyens télescopiques de réglage destinés à équiper des bancs de contrôle de carrosseries.

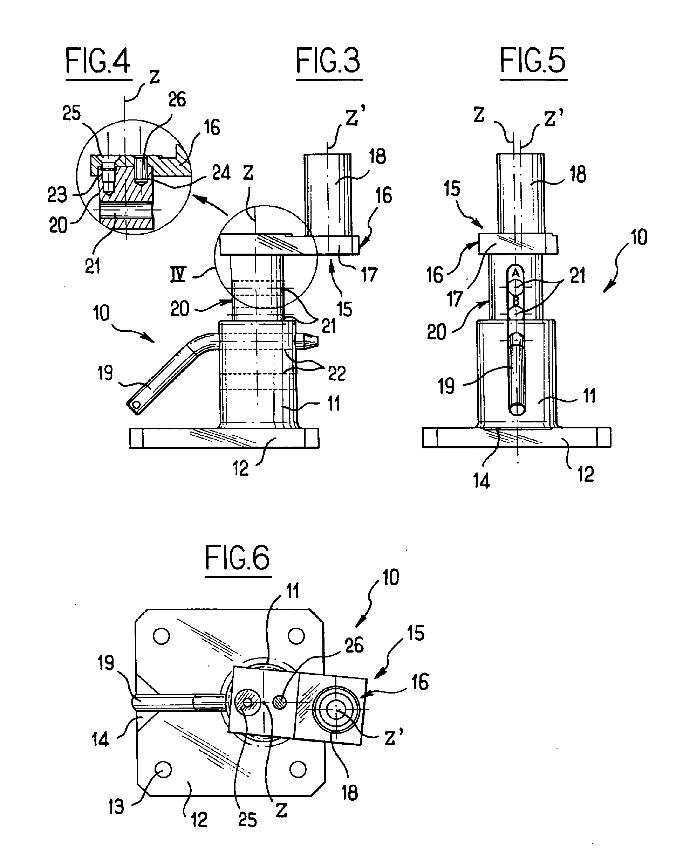

Les figures 2 à 16 permettent de distinguer plus en détail l'agencement d'un moyen télescopique de réglage 10 agencé conformément à l'invention.

Le moyen télescopique de réglage 10, d'axe vertical Z, comporte sur une semelle 12 percée de quatre trous 13 permettant la fixation par vis sur les poutres longitudinales 3' et transversales 3, ledit moyen télescopique de réglage étant repéré pour son indexage par un marquage 14. Une tige-piston 20 est montée pour coulisser dans une colonnette 11 selon la direction verticale Z, cette tige-piston 20 étant surmontée d'une tête 16. La tige-piston 20 et la tête 16 forment un ensemble mobile télescopiquement 15, qui est fixé à une hauteur donnée grâce à une broche 19 passant à la fois par des trous traversants 22 de la colonne et par un perçage traversant 21 de la tige-piston 20.

Le moyen télescopique de réglage 10 comporte une tige-piston 20 qui est choisie parmi une pluralité de tiges-pistons de longueurs axiales différentes et de même diamètre, et une tête 16 qui est fixée de façon démontable au sommet de la tige-piston choisie 20, ladite tête étant quant à elle configurée de façon propre à chaque type de véhicule concerné.

En l'espèce, la tête illustrée ici est constituée d'une plaquette 17 surmontée d'une douille cylindrique 18 d'axe Z' parallèle à l'axe Z de la tige-piston 20.

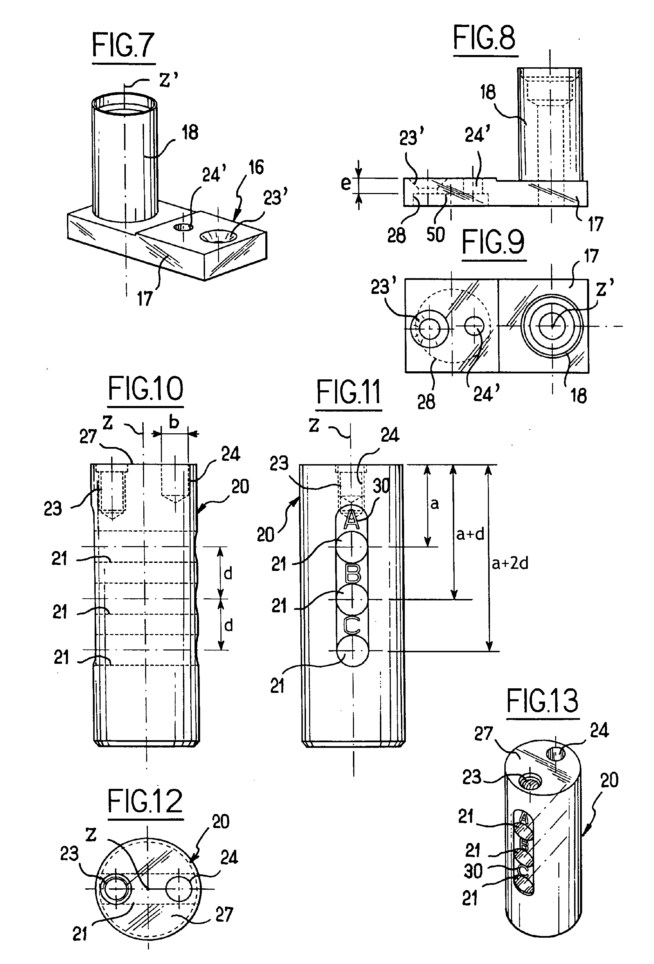

Les figures 7 à 13 permettent de mieux distinguer la structure et la géométrie de la tête 16 et d'une tige-piston 20 faisant partie de la pluralité de tiges-pistons destinées à équiper l'appareillage de l'invention.

On constate que la tige-piston 20 présente, au niveau de sa face supérieure 27, un agencement de perçages borgnes 23, 24 destinés à permettre respectivement la fixation et l'indexage angulaire de la tête 16 concernée. Le perçage 23 est en effet fileté et permet de recevoir une vis à tête fraisée 25, en particulier une vis dite "TFHC", et le perçage 24 est quant à lui lisse et calibré, par exemple avec un diamètre de 10 mm, et il est destiné à recevoir une goupille cylindrique 26 d'indexage angulaire, la vis 25 et la goupille 26 traversant la plaquette 17 par des passages respectifs 23' et 24', de façon à ne pas affleurer de la face supérieure de la plaquette 17 lorsque la tête 16 est fixée au sommet de la tige-piston 20.

En outre, la tête 16 présente inférieurement un bridage cylindrique 28, ici réalisé par évidement de la paroi inférieure de la plaquette 17, de façon à procurer à la fois un bridage et un centrage de la tête 16 par rapport à la tige-piston 20. Le fond de l'évidement, noté 50, constitue la référence en Z dans la mesure où la face supérieure 27 de la tige-piston 20 choisie vient au contact de ce fond 50. On a noté e l'épaisseur de la plaquette 17 au-delà du fond 50. A titre indicatif, la distance e sera de 8 mm.

Lorsque la tête 16 a été mise en place et fixée en coiffant le sommet de la tige-piston 20 sélectionnée, cet ensemble constitue un composant monobloc parfaitement rigide qui est analogue aux composants unitaires qui étaient jusque là spécifiques à chaque carrosserie de véhicule. La grande différence réside donc dans le fait que l'on dispose maintenant d'un ensemble de tiges-pistons de différentes longueurs et de même diamètre, sur lesquelles on peut monter autant de têtes spécifiques que l'on veut pour tenir compte des différentes géométries des carrosseries. La tête 16 est parfaitement positionnée dans l'espace en X, Y, Z, grâce au bridage et au centrage procurés par le bridage cylindrique 28, et grâce aussi à l'indexage angulaire assuré par la goupille cylindrique 26.

La tige-piston 20 comporte une pluralité de perçages traversants 21 qui sont étagés verticalement, et permettent de recevoir une broche de fixation 19 associée à la colonnette 11 à une hauteur choisie parmi la pluralité de hauteurs disponibles. En l'espèce, sur les figures 2 à 13, on utilise une tige-piston 20 présentant trois perçages traversants étagés 21, les axes de ces perçages traversants étant espacés d'une distance constante notée d, qui est par exemple choisie égale à 20 mm. Il est à noter également que la tige-piston 20 présente un marquage d'identification 30 propre à chacun de ses perçages traversants 21, lesdits marquages d'identification servant également de détrompage et formant de préférence une succession de lettres ou de chiffres. En l'espèce, sur les figures 2 à 13, le marquage d'identification 30 est constitué par des lettres A, B, C repérant les trois perçages étagés verticalement 21.

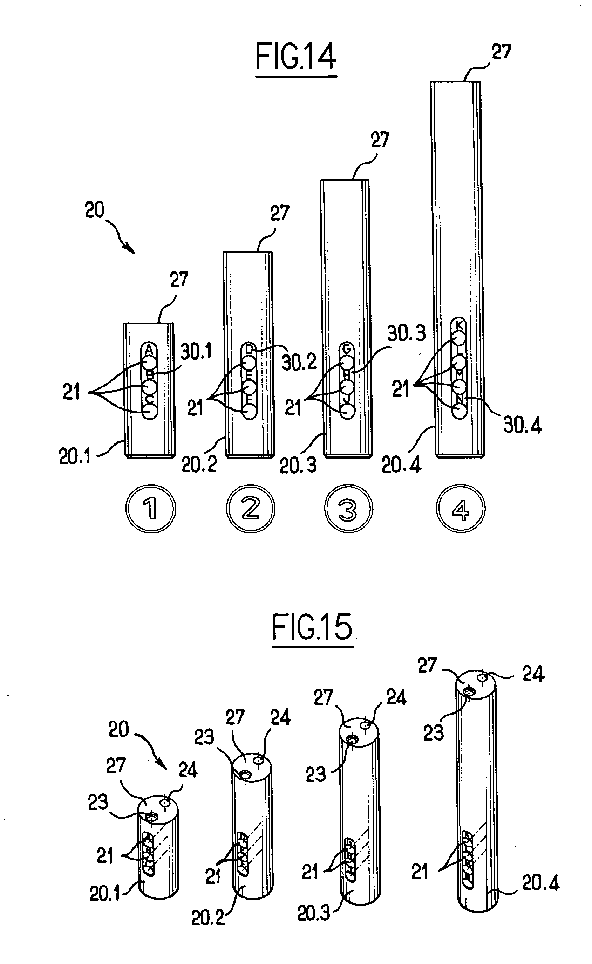

Ainsi que cela est mieux visible sur les figures 14 à 16, on dispose d'une pluralité de tiges-pistons 20 de longueurs axiales différentes et de même diamètre, en l'espèce quatre tiges-pistons notées 20.1, 20.2, 20.3, 20.4. Comme cela est visible sur la figure 15, chacune de ces tiges-pistons présente en face supérieure 27 les perçages borgnes 23, 24 servant à la fois à la fixation et à l'indexage angulaire d'une tête rapportée 16 qui est spécifique au type de véhicule concerné.

En l'espèce, les tiges-pistons 20.1, 20.2, 20.3 comportent trois perçages traversants 21, tandis que la tige-piston 20.4, qui est la plus grande, comporte quatre perçages traversants 21. Ces treize perçages traversants 21 sont repérés par des lettres différentes A, B, C, D, E, F, G, H, J, K, L, M, N. Conformément à une caractéristique de l'invention, les axes des perçages traversants 21 de toutes les tiges-pistons 20 de la pluralité de tiges-pistons sont espacés d'une distance constante prédéterminée d qui est commune à toute la série, par exemple 20 mm. Cet agencement des perçages traversants 21 des différentes tiges-pistons 20 permet de procurer une graduation en hauteur de pas constant correspondant à la distance constante prédéterminée d, qui est par exemple de 20 mm.

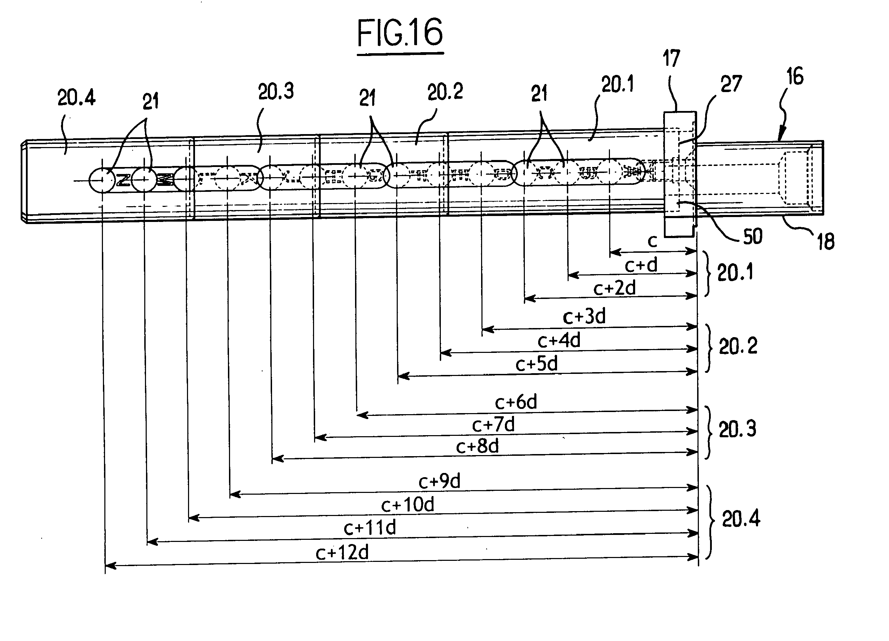

Cette graduation de pas constant ressort clairement de la figure 16 qui illustre lés quatre tiges-pistons de la pluralité agencés en une rangée et vue en bout. Si l'on note c la distance d + e, c'est-à-dire en l'espèce 40 mm, on constate que la tige-piston 20.1 donne des distances c, c + d, c + 2d, et que les autres tiges-pistons 20.2 à 20.4 donnent de la même façon des distances allant respectivement de c + 3d à c + 12 d. On obtient ainsi une graduation allant en continu de 40 à 280 mm, par exemple de 20 mm en 20 mm. Le marquage d'identification avec les lettres associées à chaque passage traversant permet d'éviter tout risque d'erreur par l'utilisateur.

De préférence, la colonnette 11 présente elle aussi deux passages de broches étagés 22, dont les axes sont distants de 1,5 d de façon à doubler la graduation continue procurée par les tiges-pistons 20 de la pluralité de tiges-pistons. Ainsi que cela est aisé à comprendre, en utilisant l'un ou l'autre des passages de broches étagés 22, on parvient à obtenir une graduation en hauteur dont le pas constant est de 10 mm. Ainsi, avec quatre tiges-pistons 20 de longueurs différentes et de même diamètre, on peut obtenir vingt-six hauteurs différentes allant graduellement de 10 mm en 10 mm.

A titre indicatif, la pluralité de tiges-pistons 20 comporte quatre types de tiges-pistons de longueur respective 110 mm, 170 mm, 230 mm et 310 mm.

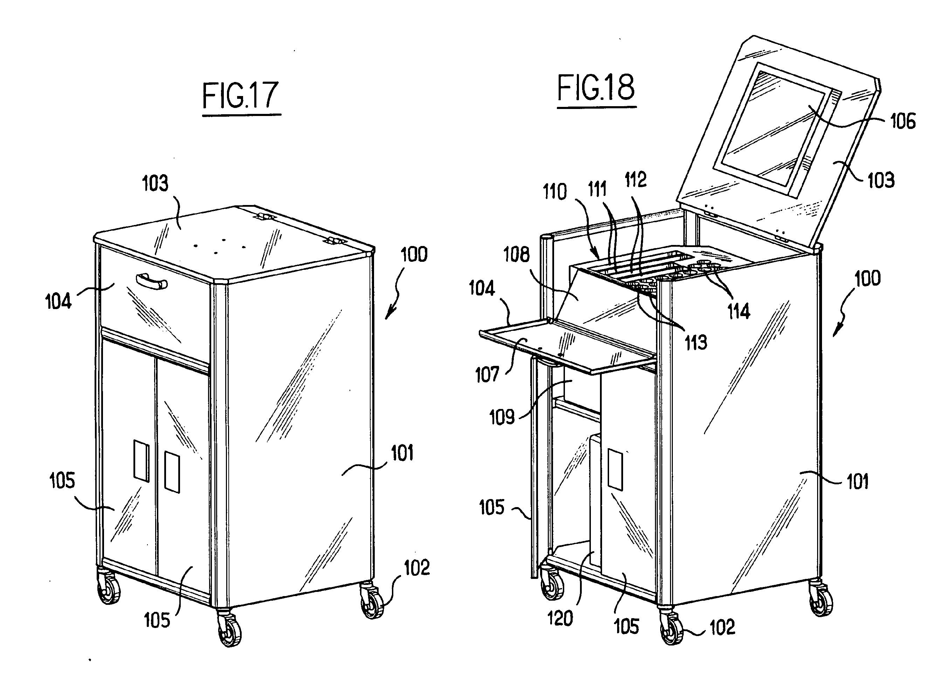

L'invention concerne également une servante de travail destinée à équiper l'appareillage qui vient d'être décrit, ladite servante de travail notée 100 étant illustrée aux figures 17 et 18, respectivement à l'état fermé et ouvert.

La servante de travail 100 comporte une armoire 101 montée sur des roulettes 102, avec un couvercle 103 pivotant, et des battants 105 permettant d'accéder à l'intérieur de l'armoire au niveau d'une imprimante 109 et d'une unité centrale inférieure 120. En position ouverte, comme cela est illustré sur la figure 18, le couvercle 103 relevé permet de dégager un écran de contrôle 106, et l'abattant 104 rabaissé permet de dégager à la fois une tablette de travail 107 et un support de clavier 108.

La servante de travail 100 comporte par contre un accessoire qui est directement lié avec l'objet de l'invention, à savoir un plateau 110 portant un ensemble de tiges-pistons 20, ledit ensemble incluant au moins une de chaque type de tige-piston constituant la pluralité de tiges-pistons.

Le plateau porteur 110 est ainsi équipé de logements débouchant en face supérieure dudit plateau, avec des logements 111, 112 d'axe horizontal pour les tiges-pistons de plus grandes longueurs, et des logements 113, 114 d'axe vertical pour les tiges-pistons de plus petites longueurs.

Le plateau porteur 110 est de préférence réalisé en mousse alvéolaire.

En l'espèce, il présente quatre logements horizontaux 111 de 310 mm de longueur destinés à recevoir des tiges-pistons de même longueur, six logement horizontaux 112 de 230 mm destinés à recevoir des tiges-pistons de même longueur. Le plateau 110 présente en outre quatorze logements verticaux 113 de 130 mm recevant des tiges-pistons de 170 mm de longueur, et dix logements verticaux 114 de 70 mm recevant des tiges-pistons de 110 mm de longueur. Ainsi que cela est aisé à comprendre, les logements verticaux 113 et 114 ont une profondeur telle que les tiges-pistons qui y sont disposées dépassent toutes de 40 mm au-dessus de la face supérieure du plateau porteur 110.

Le plateau porteur 110 est ainsi équipé de quatre tiges-pistons de 310 mm de longueur, de six tiges-pistons de 230 mm de longueur, de quatorze pistons de 170 mm de longueur, et de dix tiges-pistons de 110 mm de longueur. La demanderesse a en effet constaté qu'une telle panoplie de trente-quatre tiges-pistons de quatre longueurs différentes permet de tenir compte de la plus grande majorité des différentes carrosseries concernées.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Appareillage pour le contrôle des déformations d'une carrosserie de véhicule, comportant un banc de contrôle (1) constitué d'une base de référence percée (2) sur laquelle sont fixées des poutres longitudinales (3') et des poutres transversales (3), lesdites poutres présentant des séries de trous régulièrement espacés servant à fixer des colonnettes (11) supportant des moyens télescopiques réglables dans une direction verticale et destinés à coopérer avec des points de la carrosserie à contrôler, **caractérisé en ce que** les moyens télescopiques de réglage (10) comportent chacun d'une part une tige-piston (20) montée pour coulisser verticalement dans une colonnette associée (11), ladite tige-piston étant choisie parmi une pluralité de tiges-pistons de longueurs axiales différentes et de même diamètre, et d'autre part une tête (16) fixée de façon démontable au sommet de la tige-piston choisie (20), ladite tête étant quant à elle configurée de façon propre à chaque type de véhicule concerné, chaque tige-piston (20) de la pluralité de tiges-pistons comportant en outre une pluralité de perçages traversants (21) étagés verticalement, permettant de recevoir une broche de fixation associée à la colonnette (11) à une hauteur choisie parmi la pluralité de hauteurs disponibles, les axes des perçages traversants (21) de chacune des tiges-pistons (20) de la pluralité de tiges-pistons étant espacés d'une même distance constante prédéterminée (d) et étant agencés pour procurer une graduation en hauteur de pas constant correspondant à ladite distance constante prédéterminée (d).

2. Appareillage selon la revendication 1, **caractérisé en ce que** la colonnette (11) présente deux passages de broche étagés (22), dont les axes sont distants de 1,5d de façon à doubler la graduation continue procurée par les tiges-pistons (20) de la pluralité de tiges-pistons.

3. Appareillage selon la revendication 1 ou la revendication 2, **caractérisé en ce que** la distance constante prédéterminée (d) est choisie égale à 20 mm.

4. Appareillage selon l'une des revendications 1 à 3, **caractérisé en ce que** chaque tige-piston (20) de la pluralité de tiges-pistons présente un marquage d'identification propre à chacun de ses perçages traversants (21), lesdits marquages d'identification formant de préférence une succession de lettres ou de chiffres.

5. Appareillage selon l'une des revendications 1 à 4, **caractérisé en ce que** chaque tige-piston (20) de la pluralité de tiges-pistons présente, au niveau de sa face supérieure (27), un même agencement de perçages borgnes (23, 24) permettant la fixation et l'indexage angulaire de la tête (16) concernée.

6. Appareillage selon la revendication 5, **caractérisé en ce que** la fixation est assurée par une vis à tête fraisée (25) et l'indexage angulaire est assuré par une goupille cylindrique (26), ladite vis et ladite goupille traversant une plaquette (17) faisant partie de la tête (16).

7. Appareillage selon la revendication 5 ou la revendication 6, **caractérisé en ce que** la tête (16) présente inférieurement un bridage cylindrique (28) destiné à coiffer l'extrémité supérieure de la tige-piston choisie (20), de façon à procurer à la fois un bridage et un centrage de ladite tête par rapport à ladite tige-piston.

8. Appareillage selon l'une des revendications 1 à 7, **caractérisé en ce que** la pluralité de tiges-pistons (20) comporte quatre types de tiges-pistons de longueur respective 110 mm, 170 mm, 230 mm et 310 mm.

9. Servante de travail (100) destinée à équiper un appareillage selon l'une quelconque des revendications 1 à 8, **caractérisée en ce qu'**elle comporte un plateau (110) portant un ensemble de tiges-pistons (20), ledit ensemble incluant au moins une de chaque type de tige-piston constituant la pluralité de tiges-pistons, ledit plateau porteur (110) étant équipé de logements débouchant en face supérieure dudit plateau, avec des logements (111, 112) d'axe horizontal pour les tiges-pistons de plus grandes longueurs, et des logements (113, 114) d'axe vertical pour les tiges-pistons de plus petites longueurs.

10. Servante de travail selon la revendication 9, **caractérisée en ce que** le plateau porteur (110) est réalisé en mousse alvéolaire, et présente quatre logements horizontaux (111) de 310 mm de longueur recevant des tiges-pistons de même longueur, six logements horizontaux (112) de 230 mm recevant des tiges-pistons de même longueur, quatorze logements verticaux (113) de 130 mm recevant des tiges-pistons de 170 mm de longueur, et dix logements verticaux (114) de 70 mm recevant des tiges-pistons de 110 mm de longueur.
